# EUROPÄISCHE PATENTSCHRIFT

(11) **EP 1 812 270 B1**
(45) Veröffentlichungstag und Bekanntmachung des Hinweises auf die Patenterteilung: **06.01.2010**
(21) Anmeldenummer: 05801977.9
(22) Anmeldetag: 27.10.2005
(51) Int. Cl.: B60T 7/12, B60T 13/66, B60T 13/22, B60T 17/18, B60T 1/06, B60T 10/00

(54) **KRAFTFAHRZEUG MIT EINER BETRIEBSBREMSE UND EINER PARKBREMSE**
MOTOR VEHICLE EQUIPPED WITH A SERVICE BRAKE AND WITH A PARKING BRAKE
AUTOMOBILE EQUIPEE D'UN FREIN DE SERVICE ET D'UN FREIN DE STATIONNEMENT

(30) Priorität: 19.11.2004 DE 102004055960
(43) Veröffentlichungstag der Anmeldung: 01.08.2007
(73) Patentinhaber: ZF Friedrichshafen AG, 88038 Friedrichshafen (DE)
(72) Erfinder: HÖFLER, Hans, 88090 Immenstaad (DE); KÜHNER, Karl, 88048 Friedrichshafen (DE); REBHOLZ, Wolfgang, 88045 Friedrichshafen (DE)
(86) Internationale Anmeldenummer: PCT/EP2005/011483
(87) Internationale Veröffentlichungsnummer: WO 2006/053630

(56) Entgegenhaltungen:
- EP-A- 0 687 604
- EP-A- 1 291 258
- DE-A1- 10 339 245
- GB-A- 1 529 761
- US-A1- 2004 011 609

## Beschreibung

Die vorliegende Erfindung betrifft ein Kraftfahrzeug mit einer Betriebsbremse und einer Parkbremse gemäß dem Oberbegriff des Patentanspruchs 1. Des weiteren bezieht sich die Erfindung auf ein Verfahren zum Betreiben der erfindungsgemäßen Parkbremse.

Die Verwendung von Parkbremsen ist aus dem Stand der Technik bekannt. Insbesondere werden Parkbremsen bei Bau- bzw. Arbeitsmaschinen, beispielsweise Radlader, Schaufellader oder Dumper eingesetzt. Üblicherweise sind die Parkbremsen als reibschlüssige, am Getriebe angebaute oder im Triebstrang angeordnete Bremsen ausgeführt, wobei sowohl Bremsen luftgekühlter Bauart, beispielsweise Trommel- oder Scheibenbremsen, als auch Bremsen ölgekühlter Bauart, z.B. im Ölbad umlaufende Lamellenbremsen eingesetzt werden.

Bei den Lösungen nach dem Stand der Technik, welche luftgekühlte Parkbremsen vorsehen, entsteht der Nachteil, dass durch Verschmutzung ein erhöhter Verschleiß auftreten kann. Bei Parkbremsen ölgekühlter Bauart ist aufgrund des geringen Volumens die zur Verfügung stehende Bremsleistung begrenzt; des weiteren werden in nachteiliger Weise hohe Schleppmomente erzeugt. Die bekannten Parkbremsen sind nur bedingt als Hilfsbremsen zur Unterstützung der Betriebsbremsen einsetzbar, da die Leistungsaufnahme bei kontinuierlichem Bremsen begrenzt ist; die aufgenommene Energie wird nicht über ein aktives Kühlsystem sondern nur über Wärmeabstrahlung abgeführt.

Aus der DE 103 39 24 A1 ist ein Bremssteuersystem für ein eine Parkbremse umfassendes Fahrzeug bekannt, bei dem die Betriebsbremsen des Fahrzeugs anstelle der Parkbremse oder zusätzlich dazu betätigt werden, wenn die Anwendung der Parkbremse vom Fahrer angewiesen wurde und die Fahr zeuggeschwindigkeit außerhalb eines vorgegebenen Geschwindigkeitsbereiches liegt, um die Parkbremse zu schonen. Des weiteren wird die Parkbremse erst dann außer Eingriff gebracht, wenn der Betriebsbremsenzustand innerhalb eines vorgegebenen Betriebsbremsenbereiches liegt. Auf diese Weise wird gewährleistet, dass die Betriebsbremsen vorgefüllt sind, so dass dem Fahrer die volle Bremskraft zur Verfügung steht.

Die GB-A-1 529 761 offenbart eine Betriebsbremse und eine Parkbremse, wobei die Parkbremse über einen Handbremshebel aktivierbar ist.

Der vorliegenden Erfindung liegt die Aufgabe zugrunde, ein Kraftfahrzeug mit einer Parkbremse, insbesondere für eine Arbeitsmaschine oder ein Flurförderzeug, anzugeben, durch die die erwähnten Nachteile des Standes der Technik vermieden werden. Des weiteren soll ein Verfahren zum Betreiben der erfindungsgemäßen Parkbremse angegeben werden.

Diese Aufgabe wird für ein Kraftfahrzeug mit einer Parkbremse durch die Merkmale des Patentanspruchs 1 gelöst. Weitere erfindungsgemäße Ausgestaltungen und Vorteile gehen aus den entsprechenden Unteransprüchen hervor.

Demnach wird ein Kraftfahrzeug mit einer Parkbremse vorgeschlagen, welche unabhängig von der Betriebsbremse betätigbar ist und allein oder in Verbindung mit der Betriebsbremse das Kraftfahrzeug abbremst. In einer weiteren Ausgestaltungsform ist die Parkbremse in das Getriebe integriert. Vorzugsweise ist die erfindungsgemäße Parkbremse als im Ölbad laufende Lamellenbremse ausgebildet.

Durch die erfindungsgemäße Konzeption wird eine Verschmutzung der Bremse und somit ein erhöhter Verschleiß ausgeschlossen, da die Bremse im Getriebegehäuse geschützt angebracht ist.

Vorzugsweise ist die erfindungsgemäße Parkbremse im Getriebe zwischen der letzten Gangkupplung und dem Abtriebsflansch angeordnet und liegt im Getriebesumpf.

Gemäß einer besonders vorteilhaften Ausführungsform der Erfindung ist die Parkbremse als Negativkupplung ausgeführt, die über Federkraft schließt und hydraulisch geöffnet wird.

Zur Vermeidung von hohem Schleppmoment wird erfindungsgemäß vorgeschlagen, den Bauraum für die Bremse gekapselt auszuführen. Hierbei sind im unteren Bereich des Bremsengehäuses zwei Öffnungen zum Getriebesumpf vorgesehen. Ferner ist ein Ölzufluss und ein Ölabfluss vorgesehen. Der Ölzufluss ist vorzugsweise stirnseitig am Bremsengehäuse vorgesehen und mündet in den Innenlamellenträger. Der Ölabfluss ist am Umfang des Gehäuses der Bremse auf Höhe des Lamellenpaketes vorgesehen.

Durch eine im Getriebe integrierte Luftpumpe kann der Ölstand im Bremsengehäuse bis unter Lamellenniveau abgesenkt werden. Die Luftpumpe kann wahlweise mit der Abtriebsdrehzahl oder mit der Motordrehzahl betrieben werden. Bei Bremsung wird das Bremsengehäuse nach oben entlüftet, wobei, da der Gegendruck fehlt, der Ölstand im Bremsengehäuse steigt. Die rotierenden Belaglamellen erzeugen einen Ölfluss radial durch das Lamellenpaket, derart, dass ein Kühlölstrom über den Zuflusskanal in das Lamellenpaket über den Abfluss zurück in den Sumpf entsteht. Sobald die Bremse nicht mehr betätigt wird, schließt sich die Entlüftung und die Luftpumpe verdrängt das Öl wieder bis zum Minimalstand, der durch die Unterkante der zwei Öffnungen im Bremsengehäuse gegeben ist.

Die gemäß der Erfindung im Getriebe integrierte Bremse wird über das im Getriebe zirkulierende Schmieröl gekühlt, wobei die in das Öl weitergegebene Bremsenergie über den Getriebeölkühler abgeführt wird. Somit wird eine effektive Kühlung der Bremse mittels bereits vorhandener Bauteile gewährleistet, was sich auf die Herstellungskosten positiv auswirkt.

Das Lüften bzw. die Betätigung der Parkbremse erfolgt erfindungsgemäß über das von der Getriebeölpumpe zur Verfügung gestellte Drucköl, so dass die Parkbremse in vorteilhafter Weise über die Getriebeelektronik durch ein Proportionalventil angesteuert werden kann. Somit ist die Bremsleistung der Parkbremse dosierbar und über die Getriebeelektronik steuerbar. Zudem kann die Parkbremse unabhängig vom im Fahrzeug vorhandenen Betriebsbremssystem betrieben werden.

Im Rahmen des Verfahrens zum Betreiben der Parkbremse wird vorgeschlagen, die Parkbremse als Unterstützung der Betriebsbremse und als Dauerbremse, beispielsweise bei längerer Bergabfahrt zu verwenden.

Hierbei kann über die Getriebeelektronik beim Betätigen des Bremspedals im ersten Wegbereich die Parkbremse bzw. die Betriebsbremse zugeschaltet werden. Erst bei weiterem Durchtreten des Bremspedals wird die Betriebsbremse bzw. die Parkbremse dazugeschaltet. Auf diese Weise wird die Betriebsbremse des Fahrzeugs entlastet und mehr Bremsleistung zur Verfügung gestellt.

Für den Fall, dass beim Betätigen des Bremspedals im ersten Wegbereich die Parkbremse betätigt wird, kann diese erste Stufe erfindungsgemäß auch als Dauerbremse bei längeren Bergabfahrten genutzt werden. Im Rahmen einer vorteilhaften Weiterbildung wird die Zuschaltung der Parkbremse als Dauerbremse über die Stellgrößen Abtriebsdrehzahl und Getriebeeingangsmoment (Schubmoment) automatisiert.

Die Verwendung der hier vorgestellten Parkbremse ermöglicht auch eine Simulation eines hydrostatischen Fahrverhaltens bei der Verzögerung des Fahrzeuges, wie im Folgenden erläutert.

Bei der Realisierung des hydrostatischen Fahrverhaltens dienen erfindungsgemäß folgende Größen als Führungsgröße: Drehzahl des Motors und/oder Lastzustand des Wandlers, Abtriebsdrehzahlgradient (d.h. Verzögerungsgradient des Fahrzeuges), Fahrpedalstellung und Stellung des Vorwählhebels für den Verzögerungsgradienten. Die Getriebebremse kann hierbei durch entsprechende Ansteuerung beim Gaswegnehmen automatisiert zugeschaltet werden und das Fahrzeug mitverzögern, ohne dass der Fahrer hierzu aktiv eingreifen muss. Der Verzögerungsgradient kann über den Vorwählhebel vorgewählt oder über die Höhe des Schubmomentes bestimmt werden.

Gemäß der Erfindung kann die Parkbremse als Reversierunterstützung beim Fahrrichtungswechsel verwendet werden, beispielsweise bei einem Schaufellader mit häufigem Fahrtrichtungswechsel. Die Energie zum Abbremsen wird nach dem Stand der Technik beim Reversieren durch Umwandlung in Wärme sowohl im Wandler, als auch in der Reversierkupplung aufgebracht, wobei gleichzeitig Energie durch den Motor an der Pumpenseite des Wandlers zugeführt werden muss, um die Momente im Wandler abzustützen. Die im Getriebe integrierte Bremse kann in vorteilhafter Weise zur Abbremsung des Fahrzeuges eingesetzt werden, wobei, wie bereits erläutert, die anfallende Wärme über das Getriebekühlsystem abgeführt wird. Während der Verzögerung wird dadurch weniger Motorleistung benötigt, die für weitere Komponenten zur Verfügung steht bzw. es wird Treibstoff gespart. Als Führungsgrößen können hierbei, zusätzlich zu den oben genannten Führungsgrößen, die Abtriebsdrehzahl und die Fahrgeschwindigkeit verwendet werden.

In Abhängigkeit vom Fahrerwunsch können zusätzliche Eingriffe bzw. Steuermöglichkeiten der Parkbremse vorgesehen sein. Beispielsweise kann die Bremswirkung über eine kraft- oder wegabhängige Messung gesteuert werden, wobei der Fahrschalter mit zusätzlicher Sensorik ausgestattet werden kann.

Durch die in der Getriebesteuerung integrierte Steuerung der erfindungsgemäßen Parkbremse wird eine Überlastung oder Zerstörung durch Missbrauch vermieden.

### Bezugszeichen

- 1: Getriebegehäuse
- 2: Betriebsbremse
- 3: Parkbremse
- 4: Antriebsmotor

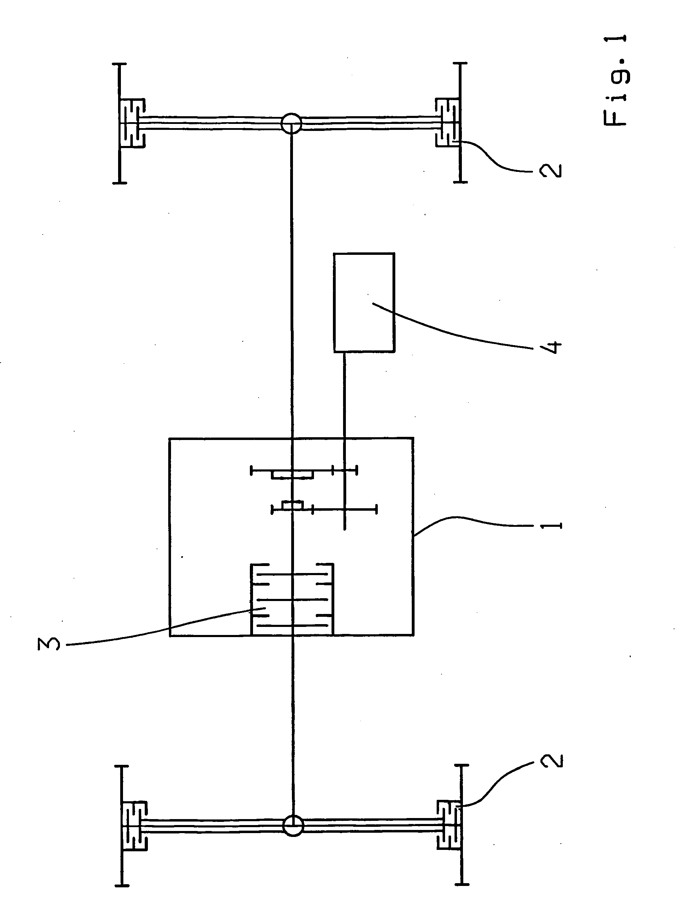

## Patentansprüche

1. Kraftfahrzeug mit einer Betriebsbremse (2) und einer mit einem Getriebe in Verbindung stehenden Parkbremse (3), wobei die Betriebsbremse (2) und die Parkbremse (3) unabhängig voneinander betreibbar sind, wobei die Parkbremse (3) zusätzlich zu der Funktion als Parkbremse (3) als Unterstützung der Betriebsbremse (2) und/oder als Dauerbremse einsetzbar ist, **dadurch gekennzeichnet, dass** die Parkbremse (3) hydraulisch im Öffnungssinne betätigbar ist und über eine Getriebeelektronik durch ein Proportionalventil angesteuert werden kann, wodurch die Bremsleistung der Parkbremse (3) dosierbar und über die Getriebeelektronik steuerbar ist und das Fahrzeug ein Bremspedal zur Ansteuerung der Betriebsbremse (2) aufweist, wobei das Bremspedal einen ersten Wegbereich aufweist, in welchem die Parkbremse (3) im Schließsinne betätigt wird, wobei bei weiterem Durchtreten des Bremspedals die Betriebsbremse (2) im Schließsinne dazugeschaltet wird oder das Bremspedal einen ersten Wegbereich aufweist, in welchem die Betriebsbremse (2) im Schließsinne betätigt wird, wobei bei weiterem Durchtreten des Bremspedals die Parkbremse (3) im Schließsinne dazugeschaltet wird.

2. Kraftfahrzeug nach Anspruch 1, **dadurch gekennzeichnet, dass** die Parkbremse (3) durch entsprechende Ansteuerung beim Gaswegnehmen automatisiert zugeschaltet wird, wobei ein Verzögerungsgradient über einen Vorwählhebel vorwählbar oder über die Höhe des Schubmomentes bestimmbar und vorggebbar ist.

3. Kraftfahrzeug nach Anspruch 1, **dadurch gekennzeichnet, dass** die Parkbremse (3) in das Getriebe des Fahrzeugs integriert ist.

4. Kraftfahrzeug nach Anspruch 1, **dadurch gekennzeichnet, dass** die Parkbremse (3) als im Ölbad laufende Lamellenbremse ausgebildet ist.

5. Kraftfahrzeug nach Anspruch 1, **dadurch gekennzeichnet, dass** die Parkbremse (3) im Getriebe zwischen der letzten Gangkupplung und dem Abtriebsflansch angeordnet ist.

6. Kraftfahrzeug nach Anspruch 1, **dadurch gekennzeichnet, dass** die Parkbremse (3) derart im Getriebe angeordnet ist, dass sie im Getriebesumpf liegt.

7. Kraftfahrzeug nach einem der vorangehenden Ansprüche, **dadurch gekennzeichnet, dass** die Parkbremse (3) als Negativkupplung ausgeführt ist, die über Federkraft schließt und hydraulisch geöffnet wird.

8. Kraftfahrzeug nach einem der vorangehenden Ansprüche, **dadurch gekennzeichnet, dass** der Bauraum für die Parkbremse (3) gekapselt ausgeführt ist, wobei im unteren Bereich des Bremsengehäuses zwei Öffnungen zum Getriebesumpf, und am Gehäuse (1) ein Ölzufluss und ein Ölabfluss vorgesehen sind.

9. Kraftfahrzeug nach einem der vorangehenden Ansprüche, **dadurch gekennzeichnet, dass** der Ölzufluss stirnseitig am Bremsengehäuse vorgesehen ist und in den Innenlamellenträger der Bremse (3) mündet, wobei der Ölabfluss am Umfang des Gehäuses der Bremse auf Höhe des Lamellenpaketes vorgesehen ist.

10. Kraftfahrzeug nach einem der vorangehenden Ansprüche, **dadurch gekennzeichnet, dass** der Ölstand im Bremsengehäuse bei nicht betätigter Bremse (3) bis unter Lamellenniveau absenkbar ist, um hohe Schleppmomente zu vermeiden.

11. Kraftfahrzeug nach einem der vorangehenden Ansprüche, **dadurch gekennzeichnet, dass** der Ölstand im Bremsengehäuse über eine in das Getriebe integrierte Luftpumpe absenkbar ist, die mit der Abtriebsdrehzahl oder der Motordrehzahl betreibbar ist, wobei bei Bremsung das Bremsengehäuse nach oben entlüftet wird, derart, dass der Ölstand im Bremsengehäuse steigt, und wobei bei beendeter Bremsung durch Schließen der Entlüftung das Öl den Minimalstand annimmt, der durch die Unterkante der zwei Öffnungen im Bremsengehäuse gegeben ist.

12. Kraftfahrzeug nach einem der vorangehenden Ansprüche, **dadurch gekennzeichnet, dass** die rotierenden Belaglamellen der Bremse (3) einen Ölfluss radial durch das Lamellenpaket erzeugen, derart, dass ein Kühlölstrom über den Zuflusskanal in das Lamellenpaket über den Abfluss zurück in den Getriebesumpf entsteht.

13. Kraftfahrzeug nach einem der vorangehenden Ansprüche, **dadurch gekennzeichnet, dass** sie über das im Getriebe zirkulierende Schmieröl gekühlt wird, wobei die in das Öl weitergegebene Bremsenergie über den Getriebeölkühler abgeführt wird.

14. Kraftfahrzeug nach einem der vorangehenden Ansprüche, **dadurch gekennzeichnet, dass** das Lüften bzw. die Betätigung der Parkbremse (3) über das von der Getriebeölpumpe zur Verfügung gestellte Drucköl erfolgt.

15. Kraftfahrzeug nach einem der vorangehenden Ansprüche, **dadurch gekennzeichnet, dass** sie unabhängig vom im Fahrzeug vorhandenen Betriebsbremssystem betreibbar ist.

## Claims

1. Motor vehicle having a service brake (2) and a parking brake (3) which is connected to a transmission, it being possible for the service brake (2) and the parking brake (3) to be operated independently of one another, it being possible for the parking brake (3), in addition to the function as parking brake (3), to be used to assist the service brake (2) and/or as retarder brake, **characterized in that** the parking brake (3) can be actuated hydraulically in the opening direction and can be activated by a proportional valve via transmission electronics, as a result of which the braking performance of the parking brake (3) can be metered and can be controlled via the transmission electronics and the vehicle has a brake pedal for actuating the service brake (2), the brake pedal having a first travel region, in which the parking brake (3) is actuated in the closing direction, the service brake (2) being switched on in addition in the closing direction in the case of the brake pedal being depressed further, or the brake pedal having a first travel region, in which the service brake (2) is actuated in the closing direction, the parking brake (3) being switched on in addition in the closing direction in the case of the brake pedal being depressed further.

2. Motor vehicle according to Claim 1, **characterized in that** the parking brake (3) is switched on in addition in an automated manner by corresponding actuating when the accelerator is released, it being possible for a retardation gradient to be preselected via a preselector lever or to be determined and predefined via the magnitude of the overrun torque.

3. Motor vehicle according to Claim 1, **characterized in that** the parking brake (3) is integrated into the transmission of the vehicle.

4. Motor vehicle according to Claim 1, **characterized in that** the parking brake (3) is configured as a multiple disc brake which runs in the oil bath.

5. Motor vehicle according to Claim 1, **characterized in that** the parking brake (3) is arranged in the transmission between the last gear clutch and the output flange.

6. Motor vehicle according to Claim 1, **characterized in that** the parking brake (3) is arranged in the transmission in such a way that it lies in the transmission sump.

7. Motor vehicle according to one of the preceding claims, **characterized in that** the parking brake (3) is configured as a negative clutch which closes via spring force and is opened hydraulically.

8. Motor vehicle according to one of the preceding claims, **characterized in that** the installation space for the parking brake (3) is of encapsulated configuration, two openings to the transmission sump being provided in the lower region of the brake housing and an oil inlet and an oil outlet being provided on the housing (1).

9. Motor vehicle according to one of the preceding claims, **characterized in that** the oil inlet is provided on the brake housing on the front side and opens into the inner disc carrier of the brake (3), the oil outlet being provided on the circumference of the brake at the level of the multiple disc assembly.

10. Motor vehicle according to one of the preceding claims, **characterized in that**, if the brake (3) is not actuated, the oil level in the brake housing can be lowered below the multiple disc level, in order to avoid high torques.

11. Motor vehicle according to one of the preceding claims, **characterized in that** the oil level in the brake housing can be lowered via an air pump which is integrated into the transmission and can be operated at the output speed or the engine speed, the brake housing being ventilated to the top in the case of a braking operation, in such a way that the oil level in the brake housing rises, and the oil assuming the minimum level by closure of the ventilation means in the case of a braking operation having ended, which minimum level is defined by the lower edge of the two openings in the brake housing.

12. Motor vehicle according to one of the preceding claims, **characterized in that** the rotating lining discs of the brake (3) produce an oil flow radially through the multiple disc assembly, in such a way that a cooling-oil flow is produced via the inflow channel into the multiple disc assembly and via the outlet back into the transmission sump.

13. Motor vehicle according to one of the preceding claims, **characterized in that** it is cooled via the lubricating oil which circulates in the transmission, the braking energy which is forwarded into the oil being discharged via the transmission oil radiator.

14. Motor vehicle according to one of the preceding claims, **characterized in that** the parking brake (3) is ventilated and actuated via the compressed oil which is provided by the transmission oil pump.

15. Motor vehicle according to one of the preceding claims, **characterized in that** it can be operated independently of the service brake system which is present in the vehicle.

## Revendications

1. Véhicule automobile comprenant un frein de service (2) et un frein de stationnement (3) en liaison avec une transmission, le frein de service (2) et le frein de stationnement (3) pouvant être commandés indépendamment l'un de l'autre, le frein de stationnement (3) pouvant être utilisé en plus de sa fonction de frein de stationnement (3) en tant qu'assistance au frein de service (2) et/ou en tant que frein continu, **caractérisé en ce que** le frein de stationnement (3) peut être actionné hydrauliquement dans le sens de l'ouverture, et peut être commandé par le biais d'une électronique de transmission par une soupape proportionnelle, de sorte que la puissance de freinage du frein de stationnement (3) puisse être dosée et commandée par l'électronique de transmission et le véhicule présente une pédale de frein pour la commande du frein de service (2), la pédale de frein présentant une première plage de déplacement dans laquelle le frein de stationnement (3) est actionné dans le sens d'une fermeture, et en cas d'enfoncement supplémentaire de la pédale de frein, le frein de service (2) est commuté dans le sens d'une fermeture ou la pédale de frein présente une première plage de déplacement dans laquelle le frein de service (2) est actionné dans le sens d'une fermeture, et en cas d'enfoncement supplémentaire de la pédale de frein, le frein de stationnement (3) est commuté dans le sens d'une fermeture.

2. Véhicule automobile selon la revendication 1,
**caractérisé en ce que** le frein de stationnement (3) est commuté automatiquement par une commande correspondante lors d'une décélération, un gradient de ralentissement pouvant être présélectionné par le biais d'un levier de présélection, ou pouvant être déterminé ou prédéfini par le biais de l'amplitude du couple de poussée.

3. Véhicule automobile selon la revendication 1,
**caractérisé en ce que** le frein de stationnement (3) est intégré dans la transmission du véhicule.

4. Véhicule automobile selon la revendication 1,
**caractérisé en ce que** le frein de stationnement (3) est réalisé sous forme de frein multidisques tournant dans un bain d'huile.

5. Véhicule automobile selon la revendication 1,
**caractérisé en ce que** le frein de stationnement (3) est disposé dans la transmission entre le dernier accouplement de vitesse et la bride de sortie.

6. Véhicule automobile selon la revendication 1,
**caractérisé en ce que** le frein de stationnement (3) est disposé dans la transmission de telle sorte qu'il soit situé dans le puisard de la transmission.

7. Véhicule automobile selon l'une quelconque des revendications précédentes, **caractérisé en ce que** le frein de stationnement (3) est réalisé sous forme d'accouplement négatif qui est fermé par le biais de la force de ressort et ouvert de manière hydraulique.

8. Véhicule automobile selon l'une quelconque des revendications précédentes, **caractérisé en ce que** l'espace de construction pour le frein de stationnement (3) est réalisé sous forme encapsulée, deux ouvertures étant prévues dans la région inférieure du boîtier du frein vers le puisard de la transmission, et un afflux d'huile et une évacuation d'huile étant prévus au niveau du boîtier (1).

9. Véhicule automobile selon l'une quelconque des revendications précédentes, **caractérisé en ce que** l'afflux d'huile est prévu du côté frontal au niveau du boîtier de frein et débouche dans le support de disque intérieur du frein (3), l'évacuation d'huile étant prévue au niveau de la périphérie du boîtier du frein à la hauteur du paquet de disques.

10. Véhicule automobile selon l'une quelconque des revendications précédentes, **caractérisé en ce que** le niveau d'huile dans le boîtier de frein peut être abaissé lorsque le frein (3) n'est pas activé, jusqu'au niveau inférieur des disques, afin d'éviter des couples d'entraînement élevés.

11. Véhicule automobile selon l'une quelconque des revendications précédentes, **caractérisé en ce que** le niveau d'huile dans le boîtier de frein peut être abaissé par le biais d'une pompe à air intégrée dans la transmission, qui peut être commandée avec le régime de sortie ou le régime du moteur, le boîtier de frein étant évacué vers le haut lors du freinage, de telle sorte que le niveau d'huile dans le boîtier de frein augmente, et dans lequel, à la fin du freinage, l'huile arrive au niveau minimum par fermeture de l'évacuation, lequel niveau minimum est donné par l'arête inférieure des deux ouvertures dans le boîtier de frein.

12. Véhicule automobile selon l'une quelconque des revendications précédentes, **caractérisé en ce que** les disques de garniture rotatifs du frein (3) produisent un flux d'huile radialement à travers le paquet de disques, de telle sorte qu'un flux d'huile de refroidissement soit produit par le biais du canal d'afflux dans le paquet de disques par le biais de l'évacuation retournant dans le puisard de la transmission.

13. Véhicule automobile selon l'une quelconque des revendications précédentes, **caractérisé en ce qu'**il est refroidi par le biais de l'huile de lubrification circulant dans la transmission, l'énergie de freinage transmise dans l'huile étant évacuée par le biais du refroidisseur d'huile de transmission.

14. Véhicule automobile selon l'une quelconque des revendications précédentes, **caractérisé en ce que** la ventilation ou l'actionnement du frein de stationnement (3) s'effectue par le biais de l'huile sous pression fournie par la pompe à huile de la transmission.

15. Véhicule automobile selon l'une quelconque des revendications précédentes, **caractérisé en ce qu'**il peut fonctionner indépendamment du système de frein de service existant dans le véhicule.
